Europäisches Patentamt

European Patent Office

Office européen des brevets

(19)

(11) Veröffentlichungsnummer: **0 085 129**
**B1**

(12) **EUROPÄISCHE PATENTSCHRIFT**

(45) Veröffentlichungstag der Patentschrift:
**06.11.85**

(21) Anmeldenummer: **82100705.1**

(22) Anmeldetag: **02.02.82**

(51) Int. Cl.⁴: **B 64 C 27/32,** B 64 C 27/48,
B 64 C 27/72

(54) **Rotor, insbesondere eines Drehflügelflugzeugs.**

(43) Veröffentlichungstag der Anmeldung:
**10.08.83 Patentblatt 83/32**

(45) Bekanntmachung des Hinweises auf die Patenterteilung:
**06.11.85 Patentblatt 85/45**

(84) Benannte Vertragsstaaten:
**DE FR GB IT**

(56) Entgegenhaltungen:
**EP - A - 0 048 799**
**FR - A - 2 397 326**
**FR - A - 2 412 461**
**FR - A - 2 416 840**
**GB - A - 2 001 025**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Hahn, Michael, Dipl.-Ing., Bahnhofstrasse 15b,
D-8012 Ottobrunn (DE)**
Erfinder: **Sperber, Franz, Dipl.-Ing.,
Schwarzenbergstrasse 29, D-8208 Kolbermoor (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Rotor insbesondere eines Drehflügelflugzeugs, mit radial auswärts gerichteten Rotornabenarmen für die Halterung jeweils eines Rotorblattes, das einen wenigstens für die Blatteinstellwinkelbewegungen torsionsweichen Blatthalsabschnitt zwischen dem Blattflügel und der Blattwurzel aufweist, wobei die Blatteinstellwinkelsteuerung mittels in der Rotornabe angeordneter Steuerglieder über eine in den jeweiligen Rotornabenarm drehwinkelbewegbar eingeführte, zur Blattwinkelachse koaxiale Steuerwelle und einen hiermit drehfest verbundenen Blattsteuerhebel auf eine den Blatthalsabschnitt berührungsfrei umgebende, radial auswärts von diesem mit dem Rotorblatt fest verbundene, torsionssteife Hülle erfolgt.

Ein derartiger Rotor gemäss der älteren auropäischen Patentanmeldung EP-A-0048 799, veröffentlicht am 7.4.82, ermöglicht trotz des Verzichts auf gesonderte mechanische Blattlager und -gelenke eine Blatteinstellwinkelverstellung vom Inneren der Rotornabe aus und somit (dennoch) deren Verwendung als Schutzgehäuse für Blattsteuermittel. Allerdings bedingt der Verzicht auf Blattwinkellager aus Festigkeitsgründen eine relativ grosse Baulänge des torsionsweichen Blatthalsabschnittes mit der Folge, dass es insbesondere unter den Blattschlag- und Blattschwenkbewegungen zu beträchtlichen Auslenkungen des Blatthalsabschnittes kommen kann, von denen die Blattsteuerglieder, soweit deren Funktionstüchtigkeit gemindert würde, zu entkoppeln sind.

Der Erfindung liegt daher für einen Rotor der eingangs genannten Art die Aufgabe zugrunde, funktionsstörende Rückwirkungen auf die Blattsteuerglieder aus der Blattschlag- und Blattschwenkbiegung sowie Blattlängsdehnung weitgehend auszuschliessen.

Diese Aufgabe ist bei einem Rotor der obengenannten Bauart dadurch gelöst, dass die torsionssteife Hülle ein Faserverbundwerkstoffkörper mit einer hinsichtlich der Schlag- und Schwenkbewegungen sowie Fliehkraftdehnung des Rotorblattes flexiblen Struktur ist. Dem hiernach vorgeschlagenen Verzicht auf Biegefestigkeit der torsionssteifen Hülle liegt die Erkenntnis zugrunde, dass solcher Verzicht ohne Beeinträchtigung der Torsionssteifigkeit möglich ist, sofern für die Hülle, die gemäss dem Anspruch 2 aus in einer elastischen Bindungsmasse gebetteten Fasern oder Fasersträngen aufgebaut oder gemäss dem Anspruch 3 ein aus Fasersträngen gebildetes Gitter-Netzwerk sein kann, eine Faserorientierung von etwa ± 45° zur Blattlängsachse gewählt wird (Anspruch 4). Denn dann kommt es bloss unter einer Biege- und/oder Zugbeanspruchung (in Blattfliehkraftwirkungsrichtung) bei der Hülle zu einer — dann erwünschten — Verschiebung der Fasern bzw. Faserstränge zueinander, weil die Torsionsmomente für die Blatteinstellwinkelbewegung durch Zugbeanspruchung der Fasern bzw. Faserstränge voll aufnehmbar sind.

Die durch die Erfindung bewirkte Entkopplung der Blattsteuerglieder von dem Rotorblatt hinsichtlich dessen aeroelastischem Verhalten lässt sich in der im Anspruch 5 gekennzeichneten Weise noch verstärken.

Diese Ausgestaltungen werden nachfolgend anhand eines Ausführungsbeispieles der Erfindung erläutert. Dabei zeigt die Zeichnung in

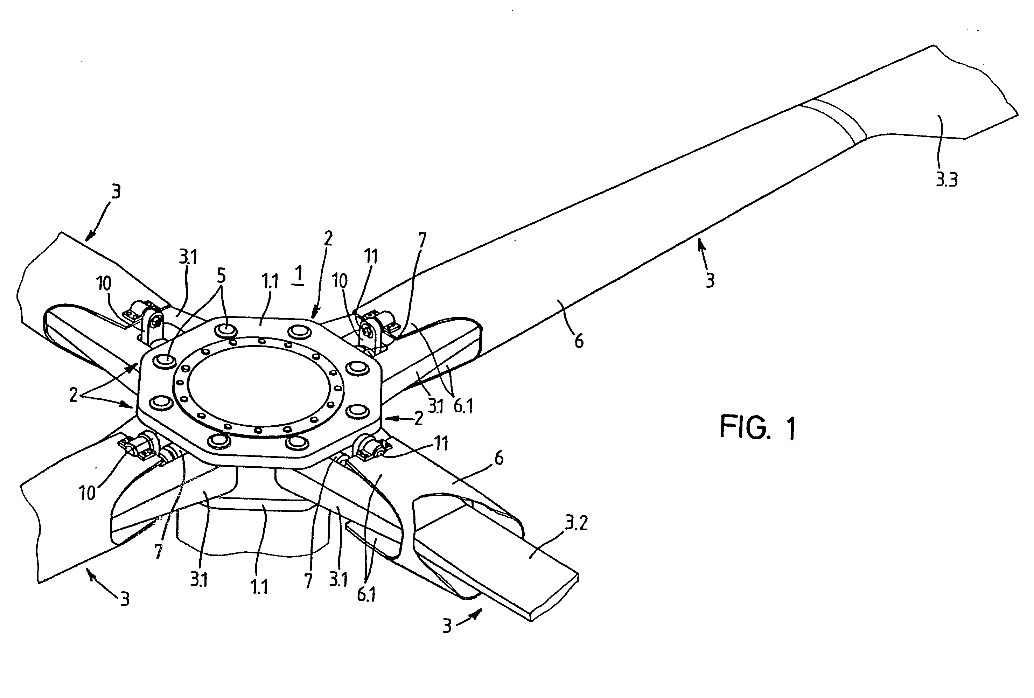

Fig. 1 perspektivisch das Zentrum eines Vierblatt-Rotors eines Drehflügelflugzeugs,

Fig. 2 in der Seitenansicht eine alternative Ausfürungsform zu einer Blattsteuer-Hülle gemäss Fig. 1.

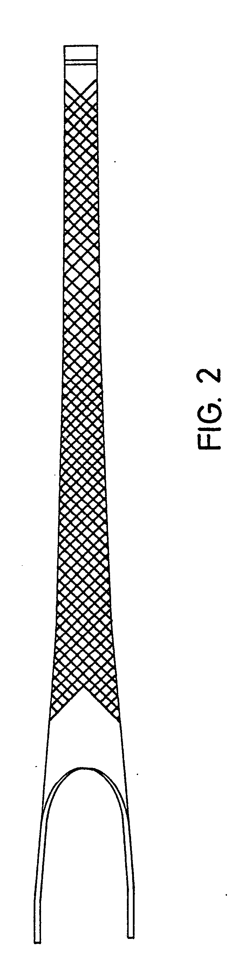

Bei dem dargestellten Rotor ist die Rotornabe 1, als ein Gehäuse für Blattsteuerglieder (beispielsweise entsprechend dem Steuergestänge gemäss der DE-OS 2 658 828), für die Blatthalterung mit radial auswärts gerichteten, gabelförmigen Rotornabenarmen 2 versehen, deren Schenkel aus fertigungstechnischen Gründen zu achteckigen Platten 1.1 zusammengefasst sind. Das einzelne Rotorblatt 3, vorzugsweise im wesentlichen aus faserverstärktem Kunststoff, ist über seine Blattwurzel 3.1 am zugehörigen Rotornabenarm 2 mittels zweier Bolzen 5 befestigt. Um bei diesem sogenannten starren Anschluss der Blattwurzel 3.1 an der Rotornabe 1 bzw. im Rotornabenarm 2 dennoch sicherzustellen, dass das Rotorblatt 3 bzw. dessen Blattflügel 3.3 Blatteinstellwinkelbewegungen ausführen kann, ist der Blatthalsabschnitt 3.2 torsionsweich, beispielsweise aufgrund einer relativ langgestreckten Ausbildung aus (Glas-)Fasersträngen mit unidirektionaler Faserorientierung in Blattlängsrichtung. Wegen der grossen Baulänge des Blatthalsabschnittes 3.2 ist für die Blatteinstellwinkelverstellung einerseits je Rotorblatt 3 eine torsionssteife Hülle 6 gewählt, welche sich, in fester Verbindung mit dem Blattflügel 3.3, längs des Blatthalsabschnittes 3.2 berührungsfrei bis zur Blattwurzel 3.1 erstreckt. Andererseits ist aus der Rotornabe 1 in den einzelnen Rotornabenarm 2 je eine mittels einer nicht dargestellten Steuerstange drehwinkelbewegbare, zur Blattwinkelachse koaxiale Steuerwelle 7 eingeführt. Die Steuerwelle 7 ragt über einen aufgrund der (Schlaufen-)Form der Blattwurzel 3.1 zwischen den beiden Befestigungsbolzen 5 belassenen Freiraum aus dem Rotornabenarm 2 heraus und steht mit der Hülle 6 über einen an diesem Wellende sitzenden zweiarmigen Blattsteuerhebel 10 in Eingriff. Um hierbei Rückwirkungen auf die Steuerwelle 7 (und somit auch auf die übrigen in der Rotornabe 1 befindlichen Blattsteuerglieder) aus Biegebewegungen des Blatthalsabschnittes und aus Blattlängsdehnungen weitgehend auszuschliessen, ist die torsionssteife Hülle 6 als ein hinsichtlich solcher Blattbewegungen flexibler Faserverbundwerkstoffkörper aufgebaut. Beispielsweise besteht die Hülle 6 aus (Glas-)Fasern oder Fasersträngen mit einer Faserorientierung von etwa ± 45° zur Blattlängsachse in einer elastischen Bindungsmasse, wie Polyurethan. Hierbei ist durch die ± 45°-Faserorientierung die nötige Torsionssteifigkeit der Hülle 6 sichergestellt. Entsprechend kann die Hülle 6 mit einer solchen Faserorientierung ebenso, wie Fig. 2 zeigt, ein in kreuzweisen Lagen gewickeltes Gitter-Netzwerk aus kunststoffgetränkten Fasersträngen sein, die z.B. an den Kreuzungspunkten durch lagenweises Abwechseln der Faserorientierung + 45° und — 45° untereinander verzahnt sind.

Schliesslich wird hinsichtlich der Blattschlagbiegung eine beträchtliche zusätzliche bewegungsmässige Entkopplung der Hülle 6 von dem Blattsteuerhebel 10 durch zwei schlagbiegeweiche, laschenförmige Ansätze 6.1 im Übergangsbereich von dem Blatthalsabschnitt 3.2 auf die Blattwurzel 3.1 erreicht. Diese Ansätze 6.1 haben im übrigen bei der gewählten relativ breiten Bauform der Blattwurzel 3.1 den Vorteil, dass es keiner entsprechenden Aufweitung der Hülle 6 oder keiner gesonderten raumüberbrückenden Bindeglieder von dem Blattsteuerhebel 10 zur Hülle 6 bedarf. Je Hebelarm ist bloss ein hebelseitig und hüllenseitig festsitzender Bolzen 11 erforderlich, welcher erforderlichenfalls an der Hülle 6 in ein Radialelastomerlager eingeführt sein kann, um eine gewisse Längs- und Winkelbeweglichkeit des betreffenden Hüllen-Ansatzes 6.1 gegenüber diesem Bolzen zu erreichen.

**Patentansprüche**

1. Rotor, insbesondere eines Drehflügelflugzeugs, mit radial auswärts gerichteten Rotornabenarmen (2) für die Halterung jeweils eines Rotorblattes (3), das einen wenigstens für die Blatteinstellwinkelbewegungen torsionsweichen Blatthalsabschnitt (3.2) zwischen dem Blattflügel und der Blattwurzel aufweist, wobei die Blatteinstellwinkelsteuerung mittels in der Rotornabe angeordneter Steuerglieder über eine in den jeweiligen Rotornabenarm drehwinkelbewegbar eingeführte, zur Blattwinkelachse koaxiale Steuerwelle (7) und einen hiermit drehfest verbundenen Blattsteuerhebel (10) auf eine den Blatthalsabschnitt berührungsfrei umgebende, radial auswärts von diesem mit Rotorblatt fest verbundene, torsionssteife Hülle (6) erfolgt, und wobei die torsionssteife Hülle (6) ein Faserverbundwerkstoffkörper mit einer hinsichtlich der Schlag- und Schwenkbewegungen sowie Fliehkraftdehnung des Rotorblattes (3) flexiblen Struktur ist.

2. Rotor nach Anspruch 1, wobei die Hülle (6) aus in einer elastischen Bindungsmasse gebetteten Fasern oder Fasersträngen aufgebaut ist.

3. Rotor nach Anspruch 1, wobei die Hülle ein aus Fasersträngen gebildetes Gitter-Netzwerk ist (Fig. 2).

4. Rotor nach Anspruch 2 oder 3, wobei die Fasern oder Faserstränge eine Faserorientierung von etwa ± 45° zur Blattlängsachse aufweisen.

5. Rotor nach Anspruch 1, wobei die Hülle (6) im Übergangsbereich von dem Blatthalsabschnitt (3.2) auf die Blattwurzel (3.1) über zwei in Blattschlagrichtung biegeweiche, laschenförmige Ansätze (6.1) mit dem Blattsteuerhebel (10) verbunden ist.

**Claims**

1. A rotor, more especially of a rotary-wing aircraft, having radially outwardly directed rotor hub arms (2) each for holding a respective rotor blade (3), which has a blade neck portion (3.2), which is torsionally pliant at least for blade pitch movements, between the blade wing and the blade root, in which the blade pitch control is effected by means of control members arranged in the rotor hub by way of a control shaft (7), introduced so as to be movable through a rotary angle into the respective rotor hub arm and coaxial with the blade angle axis, and a blade control lever (10) connected thereto in a torsionally-fast manner and to a torsionally rigid sheat (6) which surrounds the blade neck portion in a contact-free manner and which is securely connected radially outwardly therefrom to the rotor blade, and in which the torsionally rigid sheat (6) is a fibre composite material body having a structure which is flexible in relation to beat and swivel movements as well as elongation under centrifugal force of the rotor blade (3).

2. A rotor according to claim 1, in which the sheath (6) is built up from fibres or fibre strands embedded in an elastic binding composition.

3. A rotor according to claim 1, in which the sheath is a lattice network formed from fibre strands (Fig. 2).

4. A rotor according to claim 2 or 3, in which respect the fibres or fibre strands have a fibre orientation of about ± 45° relative to the longitudinal axis of the blade.

5. A rotor according to claim 1, in which the sheath (6) is connected in the transitional region from the blade neck portion (3.2) to the blade root (3.1), by way of two strap-shaped adjoint-pieces (6.1) which are flexurally pliant in the beat direction of the blade, to the blade control lever (10).

**Revendications**

1. Rotor, en particulier pour aéronef à voilure tournante, avec des bras de moyeu de rotor (2) dirigés radialement vers l'extérieur pour la fixation de chaque fois un pale de rotor (3) qui comporte entre son corps et son pied un segment de col de pale (3,2) souple en torsion au moins pour les variations de pas des pales, la commande de pas s'exerçant, au moyen d'organes de commande disposés dans le moyeu du rotor et par l'intermédiaire d'un arbre de commande (7) coaxial à l'axe de pas de pale et inséré mobile en angle de rotation dans le bras du moyeu de rotor correspondant ainsi que d'un levier de commande de pale (10) solidaire en rotation dudit arbre de commande, sur une enveloppe (6) rigide en torsion, entourant sans le toucher le segment de col de pale et reliée rigidement à la pale de rotor radialement vers l'extérieur dudit segment de col de pale, rotor dans lequel l'enveloppe (6) rigide en torsion est un corps en matière composite fibreuse avec une structure souple quant aux mouvements de battement et de traînée, ainsi qu'à l'extension par force centrifuge, de la pale de rotor (3).

2. Rotor selon la revendication 1 dans lequel l'enveloppe (6) est constituée par des fibres ou cordons de fibres noyés dans une masse de liant élastique.

3. Rotor selon la revendication 1 dans lequel l'enveloppe est un réseau grillagé formé de cordons de fibres (fig. 2).

4. Rotor selon la revendication 2 ou 3 dans lequel les fibres ou cordons de fibres ont une orientation propre de leurs fibres d'environ ± 45° par rapport à l'axe londitudinal de la pale.

5. Rotor selon la revendication 1 dans lequel l'enveloppe (6) est reliée au levier de commande de pale (10), dans la région de raccordement du segment de col de pale (3,2) au pied de pale (3,1), par deux appendices en forme de pattes (6,1) souples en flexion en direction de la pale.

FIG. 1

0 085 129

FIG. 2